(19) Europäisches Patentamt
European Patent Office
Office européen des brevets

(11) **EP 4 494 750 A1**

(12) **EUROPEAN PATENT APPLICATION**
published in accordance with Art. 153(4) EPC

(43) Date of publication:
**22.01.2025 Bulletin 2025/04**

(21) Application number: **23770232.9**

(22) Date of filing: **15.02.2023**

(51) International Patent Classification (IPC):
**B01D 63/00** $^{(2006.01)}$   **B01D 63/10** $^{(2006.01)}$
**B01D 53/22** $^{(2006.01)}$

(52) Cooperative Patent Classification (CPC):
**B01D 53/22; B01D 63/00; B01D 63/10**

(86) International application number:
**PCT/JP2023/005335**

(87) International publication number:
**WO 2023/176272 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.03.2022 JP 2022042580**

(71) Applicant: NITTO DENKO CORPORATION
Ibaraki-shi
Osaka 567-8680 (JP)

(72) Inventors:
• KATAGIRI, Makoto
  Ibaraki-shi, Osaka 567-8680 (JP)
• MURAKOSHI, Sakura
  Ibaraki-shi, Osaka 567-8680 (JP)
• NAKAMURA, Yoshihiro
  Ibaraki-shi, Osaka 567-8680 (JP)
• FUKUMURA, Takuya
  Ibaraki-shi, Osaka 567-8680 (JP)

(74) Representative: Hoffmann Eitle
Patent- und Rechtsanwälte PartmbB
Arabellastraße 30
81925 München (DE)

(54) **SPIRAL MEMBRANE ELEMENT, TRANSMISSION SPACER, AND MEMBRANE SEPARATION METHOD**

(57)    The present invention is intended to provide a spiral membrane element, a permeation spacer, and a membrane separation method suitable for suppressing an increase in a pressure loss of a permeated fluid during operation, especially in the case of membrane separation in accordance with a decompression type. A spiral membrane element 10 includes a central tube 21 and a membrane leaf 11. The membrane leaf 11 has a separation membrane 12 and a permeation spacer 14. The permeation spacer 14 has a plurality of grooves a and a plurality of projections b on one surface A1 thereof. The grooves a and the projections b each extend in a first direction X and are arranged in a second direction Y perpendicular to the first direction X on the surface A1. When the groove a has a width defined as W1 and the projection b has a width defined as W2 in the second direction Y and the projection b has a height defined as H, $9.1 \leq 1000 \times \{(W1/W2)/H\} < 18.2$ is satisfied, where W1, W2, and H are in unit of $\mu$m.

FIG.1

**Description**

TECHNICAL FIELD

The present invention relates to a spiral membrane element, a permeation spacer, and a membrane separation method.

BACKGROUND ART

A membrane separation method has been developed as a method for separating an acid gas such as carbon dioxide from a gas mixture containing the acid gas. The membrane separation method allows an efficient separation of an acid gas with a suppressed operation cost, compared with an absorption method according to which an acid gas contained in a gas mixture is absorbed by an absorbent to be separated.

A spiral membrane element is used for the membrane separation method, for example. The spiral membrane element includes a central tube and a membrane leaf that is wound around the central tube. The membrane leaf has a separation membrane and a permeation spacer. The spiral membrane element is suitable for allowing the separation membrane to have an increased membrane area in the membrane element.

For example, the permeation spacer has a plurality of grooves and a plurality of projections on one surface thereof (FIG. 2 of Patent Literature 1, for example). The grooves can function as flow passages for a permeated fluid.

CITATION LIST

Patent Literature

Patent Literature 1: JP 2015-24372 A

SUMMARY OF INVENTION

Technical Problem

In a membrane separation method using a spiral membrane element, it is required, in order to allow a separation membrane to exhibit its performance sufficiently, to suppress an increase in a pressure loss of a permeated fluid, the pressure loss being caused by various kinds of components. For example, in a spiral membrane element as disclosed in Patent Literature 1, a separation membrane tends to partially enter grooves of a permeation spacer during operation of the spiral membrane element due to a pressure difference between a feed fluid and a permeated fluid. When the separation membrane partially enters the grooves of the permeation spacer too deeply, a flow passage is reduced and a pressure loss of the permeated fluid is increased. An increase in the pressure loss of the permeated fluid significantly affects the performance of the separation membrane, especially in a membrane separation method in accordance with an operating type (a decompression type) in which a pressure difference is generated by decompressing from a permeation side in a spiral membrane element. This is because the pressure difference during operation tends to be smaller in the decompression type than in an operating type (a pressurization type) in which pressurization is carried out by controlling a feed pressure from a non-permeation side in a spiral membrane element.

Therefore, the present invention is intended to provide a spiral membrane element, a permeation spacer, and a membrane separation method suitable for suppressing an increase in a pressure loss of a permeated fluid during operation, especially in the case of membrane separation in accordance with a decompression type.

Solution to Problem

As a result of intensive studies, the present inventors have found that by controlling dimensions of a plurality of grooves and a plurality of projections of a permeation spacer to fall in specific ranges, it is possible to prevent a separation membrane from partially entering the grooves of the permeation spacer too deeply. The present inventors made further studies on the basis of this finding and have completed the present invention by identifying a structure of a permeation spacer suitable for suppressing an increase in a pressure loss.

The present invention provides a spiral membrane element including:

a central tube; and
a membrane leaf that has a separation membrane and a permeation spacer and is wound around the central tube; wherein

the permeation spacer has a plurality of grooves and a plurality of projections on one surface thereof,

the grooves and the projections each extend in a first direction and are arranged in a second direction perpendicular to the first direction on the one surface, and

when the groove has a width defined as W1 and the projection has a width defined as W2 in the second direction and the projection has a height defined as H,

$$9.1 \leq 1000 \times \{(W1/W2)/H\} < 18.2$$

is satisfied,

where W1, W2, and H are in unit of $\mu$m.

In another aspect, the present invention provides a permeation spacer used in combination with a separation membrane wound around a central tube of a spiral membrane element, including

a plurality of grooves and a plurality of projections on one surface thereof, wherein

the grooves and the projections each extend in a first direction and are arranged in a second direction perpendicular to the first direction on the one surface, and

when the groove has a width defined as W1 and the projection has a width defined as W2 in the second direction and the projection has a height defined as H,

$$9.1 \leq 1000 \times \{(W1/W2)/H\} < 18.2$$

is satisfied,

where W1, W2, and H are in unit of $\mu$m.

In still another aspect, the present invention provides a membrane separation method using the above-mentioned spiral membrane element of the present invention, including
generating a pressure difference by decompressing from a permeation side in the spiral membrane element.

Advantageous Effects of Invention

The present invention can provide a spiral membrane element, a permeation spacer, and a membrane separation method suitable for suppressing an increase in a pressure loss of a permeated fluid during operation, especially in the case of membrane separation in accordance with a decompression type.

BRIEF DESCRIPTION OF DRAWINGS

FIG. 1 is a developed perspective view illustrating schematically a spiral membrane element according to one embodiment of the present invention.
FIG. 2 is a schematic cross-sectional view of the spiral membrane element.
FIG. 3A is a schematic plan view of a permeation spacer included in the spiral membrane element.
FIG. 3B is a schematic cross-sectional view of the permeation spacer shown in FIG. 3A.
FIG. 3C is a schematic cross-sectional view of the permeation spacer that is a tricot knit.
FIG. 4 is a diagram for explaining a state in which a separation membrane has partially entered grooves of the permeation spacer during operation of the spiral membrane element.
FIG. 5 is a schematic cross-sectional view illustrating a separation membrane included in the spiral membrane element.
FIG. 6 is a diagram for explaining a method for producing the spiral membrane element.
FIG. 7 is a diagram for explaining a method for producing the spiral membrane element.
FIG. 8 is a schematic cross-sectional view illustrating one example of a measuring device for measuring a pressure loss of the permeation spacer.
FIG. 9 is a schematic cross-sectional view illustrating an example of an evaluation system for measuring a permeation flow rate per volume of the spiral membrane element.

## DESCRIPTION OF EMBODIMENTS

A spiral membrane element according to a first aspect of the present invention includes:

a central tube; and
a membrane leaf that has a separation membrane and a permeation spacer and is wound around the central tube; wherein
the permeation spacer has a plurality of grooves and a plurality of projections on one surface thereof,
the grooves and the projections each extend in a first direction and are arranged in a second direction perpendicular to the first direction on the one surface, and
when the groove has a width defined as W1 and the projection has a width defined as W2 in the second direction and the projection has a height defined as H,

$$9.1 \leq 1000 \times \{(W1/W2)/H\} < 18.2$$

is satisfied,
where W1, W2, and H are in unit of $\mu$m.

According to a second aspect of the present invention, for example, in the spiral membrane element according to the first aspect,

when a distance between a top portion that the projection on the one surface has and another surface of the permeation spacer is defined as T,
the permeation spacer satisfies T $\leq$ 450,
where T is in unit of $\mu$m.

According to a third aspect of the present invention, for example, in the spiral membrane element according to the first or second aspect,

when a distance between a top portion that the projection on the one surface has and another surface of the permeation spacer is defined as T,
the permeation spacer satisfies 0.35 $\leq$ HIT $\leq$ 0.65,
where T is in unit of $\mu$m.

According to a fourth aspect of the present invention, for example, in the spiral membrane element according to any one of the first to third aspects,
the permeation spacer satisfies H $\leq$ 200.
According to a fifth aspect of the present invention, for example, in the spiral membrane element according to any one of the first to fourth aspects,
the permeation spacer satisfies 1.2 $\leq$ W1/W2 < 2.0.
According to a sixth aspect of the present invention, for example, in the spiral membrane element according to any one of the first to fifth aspects,
the permeation spacer satisfies 600 $\leq$ W1.
According to a seventh aspect of the present invention, for example, in the spiral membrane element according to any one of the first to sixth aspects,
the permeation spacer satisfies 500 $\leq$ W2.
According to an eighth aspect of the present invention, for example, in the spiral membrane element according to any one of the first to seventh aspects,
the permeation spacer satisfies 100000 $\leq$ W1 $\times$ H.
According to a ninth aspect of the present invention, for example,
the spiral membrane element according to any one of the first to eighth aspects is used for separating an acid gas from a gas mixture containing the acid gas.
A permeation spacer according to a tenth aspect of the present invention is a permeation spacer used in combination with a separation membrane wound around a central tube of a spiral membrane element, including

a plurality of grooves and a plurality of projections on one surface thereof, wherein
the grooves and the projections each extend in a first direction and are arranged in a second direction perpendicular to the first direction on the one surface, and
when the groove has a width defined as W1 and the projection has a width defined as W2 in the second direction and the projection has a height defined as H,

$$9.1 \leq 1000 \times \{(W1/W2)/H\} < 18.2$$

is satisfied,
where W1, W2, and H are in unit of $\mu$m.

A membrane separation method according to an eleventh aspect of the present invention is, for example,

a membrane separation method using the spiral membrane element according to any one of the first to ninth aspects, including
generating a pressure difference by decompressing from a permeation side in the spiral membrane element.

The present invention will be described in detail below. The following description is not intended to limit the present invention to a specific embodiment.

<Embodiment of spiral membrane element>

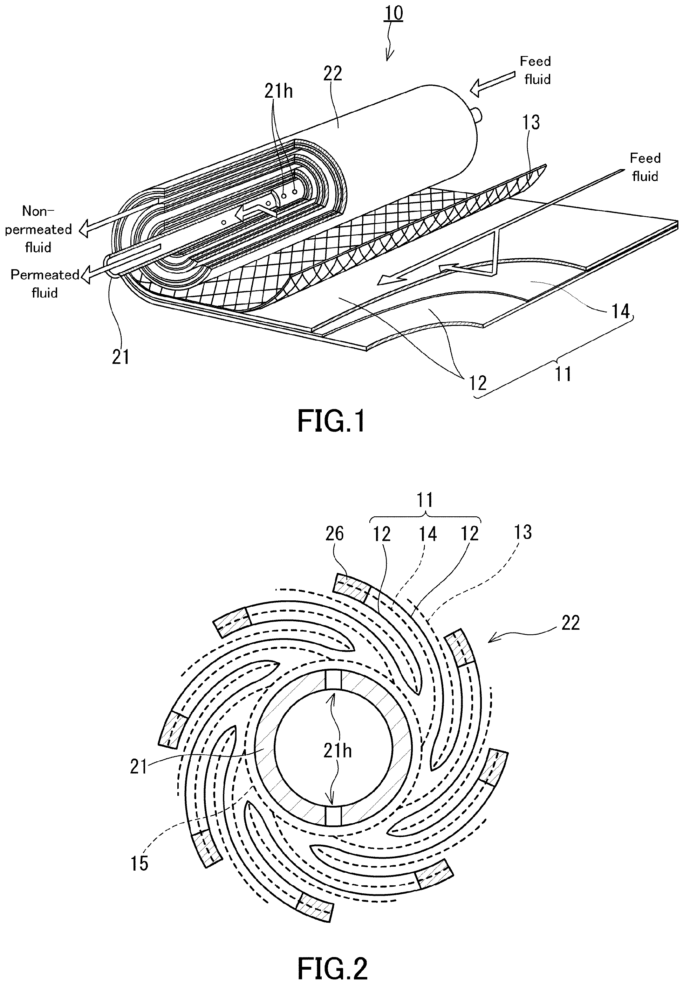

FIGs. 1 and 2 illustrate a spiral membrane element 10 (hereinafter referred to as a "separation membrane element 10") according to the present embodiment. The separation membrane element 10 includes a central tube 21 and a laminate 22. The laminate 22 is wound around the central tube 21 and disposed around the central tube 21. In an inside of the laminate 22, a feed fluid flow passage and a permeated fluid flow passage are formed.

A feed fluid is supplied from one end face of the laminate 22 to an inside of the separation membrane element 10 and flows, in parallel with a longitudinal direction of the central tube 21, through the feed fluid flow passage. In the separation membrane element 10, the feed fluid is divided to generate a permeated fluid and a non-permeated fluid. The permeated fluid is guided to an outside via the central tube 21. The non-permeated fluid is discharged to an outside of the separation membrane element 10 from another end face of the laminate 22.

The feed fluid to be processed by the separation membrane element 10 may be a gas or a liquid. In one example, the feed fluid is a gas mixture containing an acid gas, particularly a gas mixture containing carbon dioxide and nitrogen.

As shown in FIG. 2, the laminate 22 has a plurality of membrane leaves 11. Each of the membrane leaves 11 has a separation membrane 12 and a permeation spacer 14. In FIG. 2, the permeation spacer 14 is indicated by a dashed line. Specifically, each of the membrane leaves 11 has two pieces of the separation membranes 12. The two pieces of the separation membranes 12 are stacked with each other and sealed on three sides in such a manner as to have a bag-like structure. For the sealing of the two pieces of the separation membranes 12, an adhesive layer 26 including an adhesive is used, for example. The permeation spacer 14 is disposed between the two pieces of the separation membranes 12 in such a manner as to be positioned inside the bag-like structure. The permeation spacer 14 secures, between the two pieces of the separation membranes 12, a space serving as the permeated fluid flow passage. As just described above, the permeation spacer 14 is used in combination with the separation membranes 12. The number of the membrane leaves 11 in the laminate 22 is, for example, but not particularly limited to, 2 to 30.

The laminate 22 further has a feed spacer 13. In FIG. 2, the feed spacer 13 is indicated by a dashed line. The feed spacer 13 is positioned outside the above-mentioned bag-like structure and is laminated on the membrane leaf 11. Specifically, the laminate 22 has a plurality of the feed spacers 13, and the plurality of the feed spacers 13 and the plurality of the membrane leaves 11 are laminated alternately in the laminate 22. The feed spacer 13 secures, between the membrane leaf 11 and the membrane leaf 11, a space serving as the feed fluid flow passage.

As shown in FIGs. 1 and 2, the central tube 21 typically has a cylindrical shape, particularly a circular cylindrical shape. The central tube 21 serves the role of collecting the permeated fluid having permeated through each of the separation membranes 12 and guiding it to the outside of the separation membrane element 10. The central tube 21 is provided with an opening 21h that allows an inner space of the central tube 21 to communicate with an outer space of the central tube 21. The opening 21h is, for example, a through hole formed in a wall surface of the central tube 21. Specifically, the central tube 21 is provided with a plurality of the openings 21h at predetermined intervals along a direction in which the central tube 21 extends. The number of rows of the openings 21h provided along the direction in which the central tube 21 extends is, for example, but not particularly limited to, 1 and 2. The central tube 21 may be provided with two rows of the openings 21h in such a manner that the rows face each other when viewed in cross section. An outer diameter of the central tube 21 is, for example, 10 to 100 mm, and preferably 12 to 50 mm.

The separation membrane element 10 may further includes a flow passage spacer 15. In FIG. 2, the flow passage spacer 15 is indicated by a dashed line. The flow passage spacer 15 is positioned between the central tube 21 and the laminate 22 and is wound around the central tube 21 on a side closer to the central tube 21 than the laminate 22 is. The flow passage spacer 15 secures, between the laminate 22 and the central tube 21, a space serving as the permeated fluid flow passage. The flow passage spacer 15 is connected to an opening end of the membrane leaf 11 mentioned above. Thereby, the permeation spacer 14 of the membrane leaf 11 is connected to the flow passage spacer 15. The flow passage spacer 15 is in contact with the opening 21h of the central tube 21. Thereby, the permeated fluid can flow from the flow passage spacer 15 to an inside of the central tube 21 through the opening 21h.

The separation membrane element 10 may further include a shell that surrounds the laminate 22. The shell may be made of FRP (fiber reinforced plastic). In order to protect the end faces of the laminate 22 and prevent the laminate 22 from extending telescopically, an end face member may be disposed on each of both sides of the laminate 22.

[Permeation spacer]

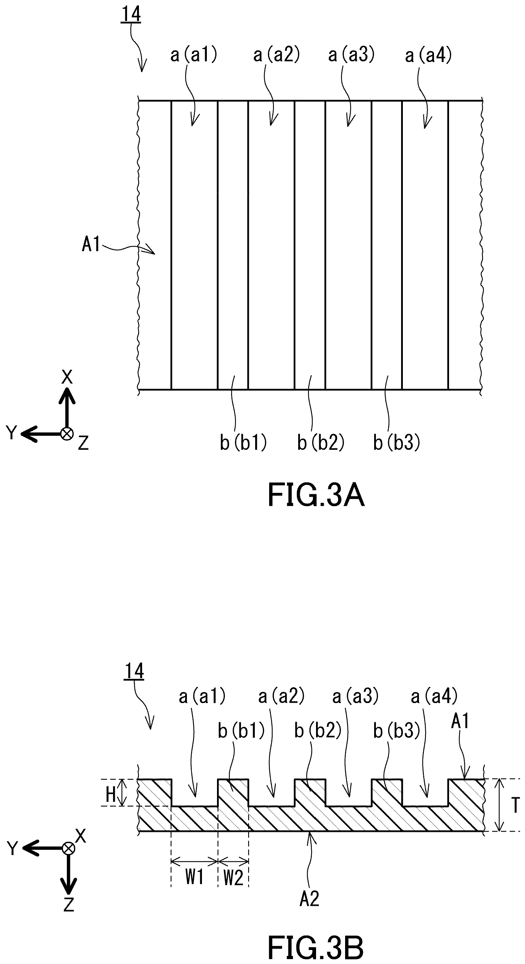

FIG. 3A is a schematic plan view of the permeation spacer 14. FIG. 3B is a schematic cross-sectional view of the permeation spacer 14 shown in FIG. 3A. As can be seen from FIGs. 3A and 3B, the permeation spacer 14 has the shape of a sheet and has a pair of surfaces A1 and A2 facing each other. The surfaces A1 and A2 are each a principal surface (a surface having a largest area) of the permeation spacer 14. In the membrane leaf 11, the surfaces A1 and A2 of the permeation spacer 14 are each in direct contact with the separation membrane 12, specifically with a porous support member included in the separation membrane 12.

In the permeation spacer 14, the surface A1 has a groove a. The groove a can function as a flow passage for the permeated fluid. The groove a extends in a first direction X, for example. The groove a may or may not extend straight in the first direction X. The groove a may extend in the first direction X while winding slightly. The first direction X is, for example, a direction from one of a pair of end faces of the permeation spacer 14 toward the other, and typically coincides with a direction (a circumferential direction of the central tube 21) in which the membrane leaf 11 is wound around the central tube 21. The groove a has, for example, a substantially rectangular shape when viewed in plane (FIG. 3A), and a cross section of the groove a also has a substantially rectangular shape (FIG. 3B). However, the shape of the groove a is not limited to the above-mentioned shape, and the cross section of the groove a may be V-shaped or U-shaped. Note that in the present description, the phrase "substantially rectangular shape" means that when a groove is viewed in plane or when a cross section of the groove is viewed, a ratio of an area of the groove with respect to an area of a smallest right-angle quadrilateral surrounding the groove is 70% or more, and preferably 90% or more.

In the permeation spacer 14, the surface A1 typically has a plurality of the grooves a. The grooves a may be different from each other in terms of shape and dimensions, but the grooves a are preferably identical to each other in terms of these. In one example, the grooves a each extend in the first direction X and are arranged in a second direction Y perpendicular to the first direction X, and preferably arranged at substantially equal intervals in the second direction Y The second direction Y is, for example, a direction from one of another pair of end faces of the permeation spacer 14 toward the other, and typically coincides with the longitudinal direction of the central tube 21. Note that a third direction Z perpendicular to each of the first direction X and the second direction Y is, for example, a direction from the surface A1 toward the surface A2 of the permeation spacer 14, and typically coincides with a radial direction of the central tube 21.

The surface A1 further has a projection b located between two grooves a. Typically, the projection b is a ridge formed between two grooves a. The projection b extends in the direction (the first direction X) in which the grooves a extend. As is the case with the grooves a, the projection b may or may not extend straight in the first direction X. The projection b may extend in the first direction X while winding slightly. As is the case with the grooves a, the projection b has, for example, a substantially rectangular shape when viewed in plane, and a cross section of the projection b also has a substantially rectangular shape.

The surface A1 typically has a plurality of the projections b. The projections b may be different from each other in terms of shape and dimensions, but the projections b are preferably identical to each other in terms of these. In one example, the projections b each extend in the first direction X and are arranged in the second direction Y, and preferably arranged at substantially equal intervals in the second direction Y The grooves a and the projections b are arranged alternately in the second direction Y As just described above, the permeation spacer 14 has, on the surface A1, a ridge-and-groove structure composed of the grooves a and the projections b.

FIGs. 3A and 3B illustrate a plurality of grooves a1, a2, a3, and a4 as well as a plurality of projections b1, b2, and b3 formed on the surface A1 of the permeation spacer 14. The grooves a1 to a4 and the projections b1 to b3 are arranged alternately in the second direction Y In FIGs. 3A and 3B, the grooves a1 to a4 are arranged at equal intervals in the second direction Y The projections b1 to b3 are also arranged at equal intervals in the second direction Y

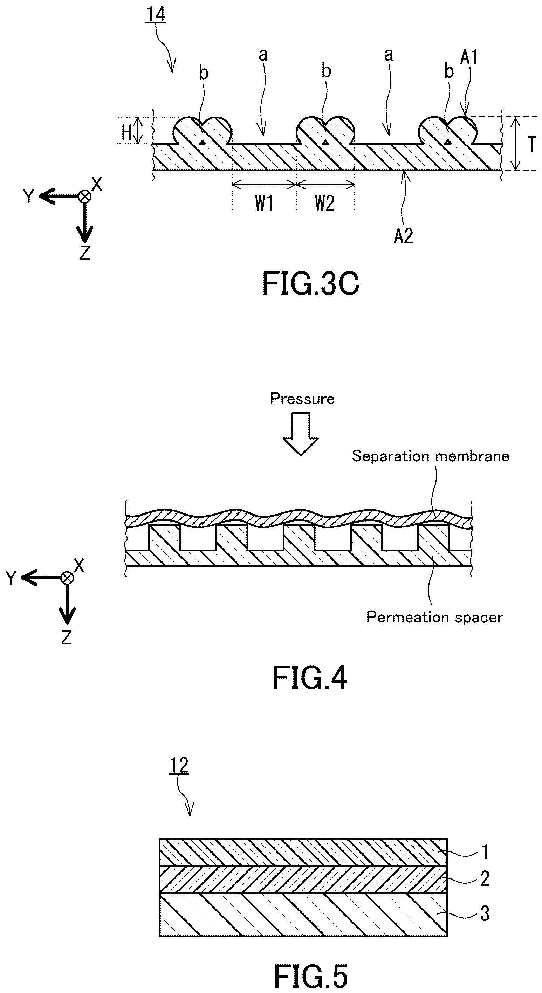

FIG. 4 is a diagram for explaining a state in which the separation membrane has partially entered the grooves of the permeation spacer during operation of the spiral membrane element. During operation of the spiral membrane element, when a pressure is applied to the separation membrane due to a pressure difference between the feed fluid and the permeated fluid, the separation membrane tends to partially enter the grooves of the permeation spacer as shown in FIG. 4. When the separation membrane partially enters the grooves of the permeation spacer too deeply, the flow passage is reduced and a pressure loss of the permeated fluid is increased. Moreover, when application and release of a pressure are repeated because the introduction of the feed fluid is stopped and restarted repeatedly, there is also a possibility that a defect, such as a crack, may occur in the separation membrane mainly at a portion that has been repeatedly pressed against the permeation spacer.

Here, as shown in FIG. 3B, the groove a has a width defined as W1 and the projection b has a width defined as W2 in the second direction Y and the projection b has a height defined as H. The permeation spacer 14 satisfies $9.1 \leq 1000 \times \{(W1/W2)/H\} < 18.2$, where W1, W2, and H are in unit of $\mu m$. The width W2 of the projection b corresponds to a pitch width of the grooves a. The height H of the projection b corresponds to a distance between a bottom face of the groove a and a top portion of the projection b. According to the permeation spacer 14 satisfying the parameter formula, it is possible to inhibit the separation membrane 12 from partially entering the grooves a of the permeation spacer 14. Therefore, the permeation spacer 14 satisfying the parameter formula is particularly suitable for suppressing an increase in the pressure loss of the permeated fluid during operation of the separation membrane element 10. Moreover, it is also possible to suppress the occurrence of the defect in the separation membrane 12.

The permeation spacer 14 may satisfy $9.1 \leq 1000 \times \{(W1/W2)/H\} \leq 15.0$ or $9.1 \leq 1000 \times \{(W1/W2)/H\} \leq 12.0$. In this case, it is possible to further suppress an increase in the pressure loss of the permeated fluid during operation of the separation membrane element 10.

Here, as shown in FIG. 3B, a distance between the top portion of the projection b on the surface A1 of the permeation spacer 14 and the surface A2 is defined as T. The permeation spacer may satisfy $T \leq 450$, where T is in unit of $\mu m$. The distance T corresponds to a thickness of the permeation spacer 14. Therefore, in some cases, the distance T is referred to as a thickness T in the present description. That is, the thickness T of the permeation spacer 14 may be 450 $\mu m$ or less. The permeation spacer 14 with the thickness T of 450 $\mu m$ or less is suitable for allowing the separation membrane 12 to have an increased membrane area in the separation membrane element 10.

The permeation spacer 14 may satisfy $T \leq 400$. That is, the thickness T of the permeation spacer 14 may be 400 $\mu m$ or less.

The lower limit of the thickness T of the permeation spacer 14 is not particularly limited. The thickness T of the permeation spacer 14 is 200 $\mu m$ or more, for example. The thickness T of the permeation spacer 14 may be 220 $\mu m$ or more, or 250 $\mu m$ or more.

<Method for determining width W1 of groove, width W2 of projection, height H of projection, and thickness T>

In the present disclosure, the width W1 of the groove a, the width W2 of the projection b, the height H of the projection b, and the thickness T can be determined by the following method. First, the permeation spacer 14 is left at rest on a flat surface, and a cross section of the permeation spacer 14 taken along the second direction Y is observed with a microscope. The magnification is adjusted so that the number of the grooves a or the number of the projections b included in the obtained microscope image is approximately five. In one example, the magnification is approximately 100. To determine the width W1 of the groove a, a minimum value of a width of each of the grooves a included in the microscope image (a minimum value of the distance, in the second direction Y, between two adjacent projections b) is calculated by image processing. The average value of the calculated values obtained can be referred to as the width W1 of the groove a. To determine the width W2 of the projection b, a maximum value of a width of each of the projections b included in the microscope image (a maximum value of the distance, in the second direction Y, between two adjacent grooves a) is calculated by image processing. The average value of the calculated values obtained can be referred to as the width W2 of the projection b. To determine the height H of the projection b, a maximum value of a height of each of the projections b included in the microscope image is calculated by image processing. The average value of the calculated values obtained can be referred to as the height H of the projection b. To determine the thickness T, a maximum value of a distance between a top portion of each of the projections b included in the microscope image and the surface A2 is calculated by image processing. The average value of the calculated values obtained can be referred to as the thickness T.

The permeation spacer 14 may satisfy $0.35 \leq HIT \leq 0.65$. That is, a ratio of the height H of the projection b with respect to the thickness T of the permeation spacer 14 may be 0.35 or more and 0.65 or less. In this case, it is possible to further suppress an increase in the pressure loss of the permeated fluid during operation of the separation membrane element 10.

The permeation spacer 14 may satisfy $0.40 \leq HIT \leq 0.60$. That is, a ratio of the height H of the projection b with respect to the thickness T of the permeation spacer 14 may be 0.40 or more and 0.60 or less.

The permeation spacer 14 may satisfy $H \leq 200$. That is, the height H of the projection b may be 200 $\mu m$ or less in the permeation spacer 14. In this case, it is possible to further suppress an increase in the pressure loss of the permeated fluid during operation of the separation membrane element 10.

The permeation spacer 14 may satisfy $H \leq 190$, $H \leq 180$, or $H \leq 160$. That is, the height H of the projection b may be 190 μm or less, 180 μm or less, or 160 μm or less in the permeation spacer 14.

In the permeation spacer 14, the lower limit of the height H of the projection b is not particularly limited. The height H of the projection b is 50 μm or more, for example. The height H of the projection b may be 85 μm or more, 100 μm or more, 120 μm or more, or 135 μm or more.

In the permeation spacer 14, the width W1 of the groove a may be larger than the width W2 of the projection b. In other words, the permeation spacer 14 may satisfy $1 < W1/W2$.

The permeation spacer 14 may satisfy $1.2 \leq W1/W2 < 2.0$. That is, a ratio of the width W1 of the groove a with respect to the width W2 of the projection b may be 1.2 or more and less than 2.0 in the permeation spacer 14. In this case, it is possible to further suppress an increase in the pressure loss of the permeated fluid during operation of the separation membrane element 10.

The permeation spacer 14 may satisfy $600 \leq W1$. That is, the width W1 of the groove a may be 600 μm or more in the permeation spacer 14. In this case, it is possible to further suppress an increase in the pressure loss of the permeated fluid during operation of the separation membrane element 10.

The permeation spacer 14 may satisfy $800 \leq W1$. That is, the width W1 of the groove a may be 800 μm or more in the permeation spacer 14.

In the permeation spacer 14, the upper limit of the width W1 of the groove a is not particularly limited. The width W1 of the groove a is, for example, 1500 μm or less, and may be 1300 μm or less.

The permeation spacer 14 may satisfy $500 \leq W2$. That is, the width W2 of the projection b may be 500 μm or more in the permeation spacer 14. In this case, it is possible to further suppress an increase in the pressure loss of the permeated fluid during operation of the separation membrane element 10.

The permeation spacer 14 may satisfy $600 \leq W2$. That is, the width W2 of the projection b may be 600 μm or more in the permeation spacer 14.

In the permeation spacer 14, the upper limit of the width W2 of the projection b is not particularly limited. The width W2 of the projection b is, for example, 1000 μm or less, and may be 800 μm or less.

The permeation spacer 14 may satisfy $1000 \leq W1 + W2$. That is, a total value (W1 + W2) of the width W1 of the groove a and the width W2 of the projection b may be 1000 μm or more.

The upper limit of the total value (W1 + W2) of the width W1 of the groove a and the width W2 of the projection b is not particularly limited. The total value (W1 + W2) of the width W1 of the groove a and the width W2 of the projection b is, for example, 2200 μm or less, and may be 1900 μm or less.

The permeation spacer 14 may satisfy $100000 \leq W1 \times H$. That is, a passage cross-sectional area per groove a may be 100000 μm$^2$ or more in the permeation spacer 14. In this case, it is possible to further suppress an increase in the pressure loss of the permeated fluid during operation of the separation membrane element 10.

The permeation spacer 14 may satisfy $110000 < W1 \times H$. That is, the passage cross-sectional area per groove a may be more than 110000 μm$^2$ in the permeation spacer 14.

In the permeation spacer 14, the upper limit of the passage cross-sectional area per groove a is not particularly limited. The passage cross-sectional area per groove a is, for example, 240000 μm$^2$ or less, and may be 200000 μm$^2$ or less.

The number of the grooves a per 4 mm in the second direction Y is, for example, but not particularly limited to, 1 to 4, and may be 2 to 3. The larger the number of the grooves a is, the larger the number of the projections b is and the more it tends to be possible to inhibit the separation membrane 12 from entering the grooves a. In contrast, the smaller the number of the grooves a is, the larger the width W1 of the groove a can be adjusted to be, so that the pressure loss of the permeated fluid tends to be able to be reduced.

The surface A2 of the permeation spacer 14 has no grooves and is flat, for example. The surface A2 may be smooth. For example, the smooth surface A2 has an arithmetic mean roughness Ra of 100 μm or less, and preferably 60 μm or less, the arithmetic mean roughness Ra being specified in Japanese industrial specification (JIS) B0601:2001.

The permeation spacer 14 usually has an opening (a gap) for delivering the permeated fluid from the surface A2 to the surface A1. An opening ratio of the permeation spacer 14 is, for example, but not particularly limited to, 10% to 80%. The opening ratio of the permeation spacer 14 can be determined by the following method. First, the permeation spacer 14 is put on a film, and a surface (the surface A2, for example) of the permeation spacer 14 is observed with a scanning electron microscope (SEM). From the obtained electron microscope image, an area E1 of the surface of the permeation spacer 14 and an area E2 in which the film can be seen through the permeation spacer 14 are calculated by image processing. The area E2 corresponds to an area of a gap formed in the permeation spacer 14. A ratio of the area E2 with respect to the area E1 can be determined as the opening ratio of the permeation spacer 14.

Examples of the permeation spacer 14 include a tricot knit, especially a single tricot knit. Examples of a material of the tricot knit include: a resin material such as polypropylene (PP), polyethylene (PE), polyethylene terephthalate (PET), polyamide, polyphenylene sulfide (PPS), an ethylene-chlorotrifluoroethylene copolymer (ECTFE), an epoxy resin, or a urethane resin; a natural polymer; a rubber; and a metal. The permeation spacer 14 may be a single tricot knit composed of PET, or a material obtained by impregnating the single tricot knit with an epoxy resin.

FIG. 3C is a schematic cross-sectional view of the permeation spacer 14 that is a tricot knit. In the case where the permeation spacer 14 is a tricot knit, the groove a is a portion between wales. In the case where the permeation spacer 14 is a tricot knit, the width W1 of the groove a, the width W2 of the projection b, the height H of the projection b, and the thickness T are defined as shown in FIG. 3C. That is, it is possible to determine the width W1 of the groove a, the width W2 of the projection b, the height H of the projection b, and the thickness T by the above-mentioned method, based on a tangential line to a most expanded portion of a wale.

The permeation spacer 14 that is a tricot knit may have a knitting density of 16 to 32 wales and 30 to 37 courses. The term "wale" means a loop in a lengthwise direction of a knit. The term "course" means a loop in a widthwise direction of a knit. A density of a knit (a knitting density) is expressed by the number of wales of per inch (25.4 mm) (a wale density) and the number of courses per inch (a course density). The knitting density may be expressed by (the wale density) × (the course density).

The permeation spacer 14 may be a resin molded product obtained by forming or shaping the grooves a and the projections b in a sheet-shaped resin substrate. Examples of a material of the sheet-shaped substrate include: an ethylene-vinyl acetate copolymer resin; polyolefin such as polyethylene or polypropylene; an olefine copolymer; a urethane resin; and a polymer such as an epoxy resin. These materials may be used alone, or a mixture of two or more of these may be used.

[Feed spacer and flow passage spacer]

Each of the feed spacer 13 and the flow passage spacer 15 is not particularly limited and a known material can be used. Examples of each of the feed spacer 13 and the flow passage spacer 15 include a net, a mesh, a wire woven fabric, a fiber woven fabric, a nonwoven fabric, a grooved sheet, and a corrugated sheet. Examples of a material of each of these spacers 13 and 15 include: a resin material such as polypropylene (PP), polyethylene (PE), polyethylene terephthalate (PET), polyamide, polyphenylene sulfide (PPS), an ethylene-chlorotrifluoroethylenecopolymer (ECTFE), an epoxy resin, or a urethane resin; a natural polymer; a rubber; and a metal.

A thickness of each of the spacers 13 and 15 is, for example, but not particularly limited to, 100 μm to 2000 μm. An opening ratio of each of the spacers 13 and 15 is, for example, but not particularly limited to, 10% to 80%. The opening ratio of each of the spacers 13 and 15 can be determined by the method mentioned above for the permeation spacer 14. The flow passage spacer 15 may have a structure that is the same as or different from that of the permeation spacer 14.

[Separation membrane]

As shown in FIG. 5, the separation membrane 12 includes, for example, a separation functional layer 1, a porous support member 3 supporting the separation functional layer 1, and an intermediate layer 2 that is disposed between the separation functional layer 1 and the porous support member 3. The intermediate layer 2 is, for example, in direct contact with each of the separation functional layer 1 and the porous support member 3.

(Separation functional layer)

The separation functional layer 1 is, for example, a layer capable of allowing an acid gas contained in a gas mixture to preferentially permeate therethrough. The separation functional layer 1 preferably includes a resin. Examples of the resin included in the separation functional layer 1 include a polyether block amide resin, a polyamide resin, a polyether resin, a polyimide resin, a polyetherimide resin, a cellulose acetate resin, a silicone resin, and a fluorine resin. The separation functional layer 1 preferably includes a polyimide resin or a cellulose acetate resin, and more preferably includes a cellulose acetate resin. The separation functional layer 1 is preferably composed substantially of a resin. In the present description, the phrase "composed substantially of" means exclusion of other component that alters essential characteristics of a material referred to, and for example means that 95 wt% or more or even 99 wt% or more is composed of the material.

A thickness of the separation functional layer 1 is, for example, 50 μm or less, preferably 25 μm or less, and more preferably 15 μm or less. The thickness of the separation functional layer 1 may be 0.05 μm or more, or 0.1 μm or more.

(Intermediate layer)

The intermediate layer 2 includes a resin, for example, and may further include nano particles dispersed in the resin (a matrix). The nanoparticles may be separated from each other or partially aggregate in the matrix. A material of the matrix is not particularly limited, and examples thereof include: a silicone resin such as polydimethylsiloxane; a fluorine resin such as polytetrafluoroethylene; an epoxy resin such as polyethylene oxide; a polyimide resin; a polysulfone resin; a polyacetylene resin such as polytrimethylsilylpropyne or polydiphenylacetylene; and a polyolefin resin such as polymethylpentene. The matrix preferably includes a silicone resin.

The nanoparticles may include an inorganic material or an organic material. Examples of the inorganic material included in the nanoparticles include silica, titania, and alumina. The nanoparticles preferably include silica.

A thickness of the intermediate layer 2 is, for example, but not particularly limited to, less than 50 $\mu$m, preferably 40 $\mu$m or less, and more preferably 30 $\mu$m or less. The lower limit of the thickness of the intermediate layer 2 is, for example, but not particularly limited to, 1 $\mu$m. The intermediate layer 2 is, for example, a layer having a thickness of less than 50 $\mu$m.

(Porous support member)

The porous support member 3 supports the separation functional layer 1 via the intermediate layer 2. Examples of the porous support member 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials.

The porous support member 3 has an average pore diameter of 0.01 to 0.4 $\mu$m, for example. A thickness of the porous support member 3 is, for example, but not particularly limited to, 10 $\mu$m or more, preferably 20 $\mu$m or more, and more preferably 50 $\mu$m or more. The thickness of the porous support member 3 is, for example, 300 $\mu$m or less, preferably 200 $\mu$m or less, and more preferably 150 $\mu$m or less.

[Method for producing spiral membrane element]

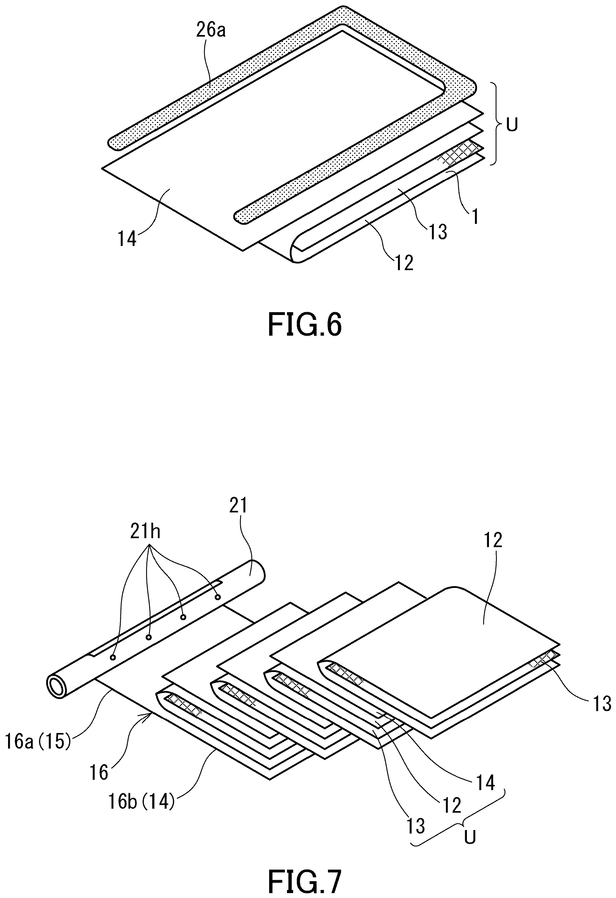

Next, an example of the method for producing the separation membrane element 10 will be described referring to FIGs. 6 and 7. First, as shown in FIG. 6, the separation membrane 12 is folded in half in such a manner that the separation functional layer 1 of the separation membrane 12 is positioned inside. The feed spacer 13 is disposed inside the separation membrane 12 folded in half, and the permeation spacer 14 is disposed on the separation membrane 12. Next, an adhesive 26a is applied onto three sides of an outer circumferential portion of the permeation spacer 14. Thus, a separation membrane unit U is obtained. The adhesive 26a is in an uncured state at this point.

Next, as shown in FIG. 7, the central tube 21, a spacer 16, and a plurality of the separation membrane units U are prepared. The spacer 16 has, for example, a first portion 16a that is directly wound around the central tube 21, and a second portion 16b that is laminated on the separation membrane unit U. The first portion 16a of the spacer 16 corresponds to the flow passage spacer 15, and the second portion 16b corresponds to the permeation spacer 14. A material, a thickness, etc. of the first portion 16a may be the same as or different from those of the second portion 16b. The plurality of the separation membrane units U are placed on the second portion 16b of the spacer 16 and disposed stepwise. The number of the separation membrane units U is, for example, but not particularly limited to, 2 to 30. Note that the separation membrane unit U positioned uppermost may not have the permeation spacer 14, for example.

Next, the first portion 16a of the spacer 16 is wound around the central tube 21. The number of windings of the first portion 16a is, for example, but not particularly limited to, 1 to 15, and preferably 2 to 10.

Next, the separation membrane units U are wound around the central tube 21. At this time, the separation membrane unit U positioned uppermost is laminated on the second portion 16b of the spacer 16. After the separation membrane units U are wound around the central tube 21, the adhesive 26a is cured to form the adhesive layer 26 while the bag-like membrane leaf 11 is formed. Thus, an assembly including the central tube 21 and the laminate 22 is obtained.

[Properties of spiral membrane element]

In the separation membrane element 10, the membrane separation of the feed fluid by the separation membrane 12 proceeds by utilizing a pressure difference between the feed fluid and the permeated fluid as a driving force. A pressure loss caused in the separation membrane element 10 reduces the above-mentioned pressure difference and decreases a permeation rate of the permeated fluid from the separation membrane 12, which fails to allow the separation membrane 12 to exhibit its performance sufficiently. Especially, in an operating type (a decompression type) in which a pressure difference is generated by decompressing from a permeation side in the separation membrane element 10, a pressure difference during operation tends to be smaller than in an operating type (a pressurization type) in which pressurization is carried out by controlling a feed pressure from a non-permeation side in the separation membrane element 10. Therefore, an increase in the pressure loss of the permeated fluid significantly affects the performance of the separation membrane especially in the case of the decompression type.

According to the studies by the present inventors, the pressure loss tends to be caused particularly remarkably in the permeated fluid flow passage. This relates to the fact that in a spiral membrane element, the separation membrane tends to partially enter the grooves of the permeation spacer during operation of the spiral membrane element due to a pressure difference between a feed fluid and a permeated fluid. This is because when the separation membrane partially enters the grooves of the permeation spacer too deeply, the flow passage is reduced and the pressure loss of the permeated fluid is increased. Therefore, by focusing on the permeation spacer 14 that secures the space serving as the permeated fluid flow passage and by controlling the dimensions of the grooves a and the projections b of the permeation spacer 14 to fall in specific ranges, the separation membrane element 10 of the present embodiment prevents the separation membrane 12 from partially entering the grooves a of the permeation spacer 14 too deeply and thereby suppresses an increase in the pressure loss of the permeated fluid.

In the separation membrane element 10 of the present embodiment, when the groove a has a width defined as W1 and the projection b has a width defined as W2 in the second direction Y and the projection b has a height defined as H, the permeation spacer 14 satisfies $9.1 \leq 1000 \times \{(W1/W2)/H\} < 18.2$, where W1, W2, and H are in unit of $\mu$m. The permeation spacer 14 satisfying the above-mentioned parameter formula is excellent in balance among the width W1 of the groove a, the width W2 of the projection b, and the height H of the projection b, and thus inhibits the separation membrane 12 from partially entering the grooves a of the permeation spacer 14. In the permeation spacer 14 in which $1000 \times \{(W1/W2)/H\}$ is less than 18.2, when the height H of the projection b is fixed, for example, the width W1 of the groove a is never too large with respect to the width W2 of the projection b. This prevents the separation membrane 12 from partially entering the grooves a too deeply reducing the flow passage, and thereby an increase in the pressure loss of the permeated fluid is suppressed and a sufficient permeation flow rate can be secured. Moreover, in the permeation spacer 14 in which $1000 \times \{(W1/W2)/H\}$ is less than 18.2, when W1/W2 is fixed, for example, the height H of the projection b is never too small with respect to the width W1 of the groove a and the width W2 of the projection b. Thereby, an increase in the pressure loss of the permeated fluid is suppressed and a sufficient permeation flow rate can be secured. In the permeation spacer 14 in which $1000 \times \{(W1/W2)/H\}$ is 9.1 or more, when the height H of the projection b is fixed, for example, the width W1 of the groove a is never too small with respect to the width W2 of the projection b. Thereby, an increase in the pressure loss of the permeated fluid is suppressed and a sufficient permeation flow rate can be secured. Moreover, in the permeation spacer 14 in which $1000 \times \{(W1/W2)/H\}$ is 9.1 or more, when W1/W2 is fixed, for example, the height H of the projection b is never too large with respect to the width W1 of the groove a and the width W2 of the projection b. Accordingly, the thickness T of the permeation spacer 14 is never too large, which makes it possible to avoid a reduction in the membrane area of the separation membrane 12 in the separation membrane element 10. As just described above, the permeation spacer 14 satisfying the above-mentioned parameter formula is particularly suitable for suppressing an increase in the pressure loss of the permeated fluid during operation of the separation membrane element 10. Moreover, it is also possible to suppress the occurrence of the defect in the separation membrane 12 due to that the separation membrane 12 partially enters the grooves a too deeply.

<Method for calculating pressure loss>

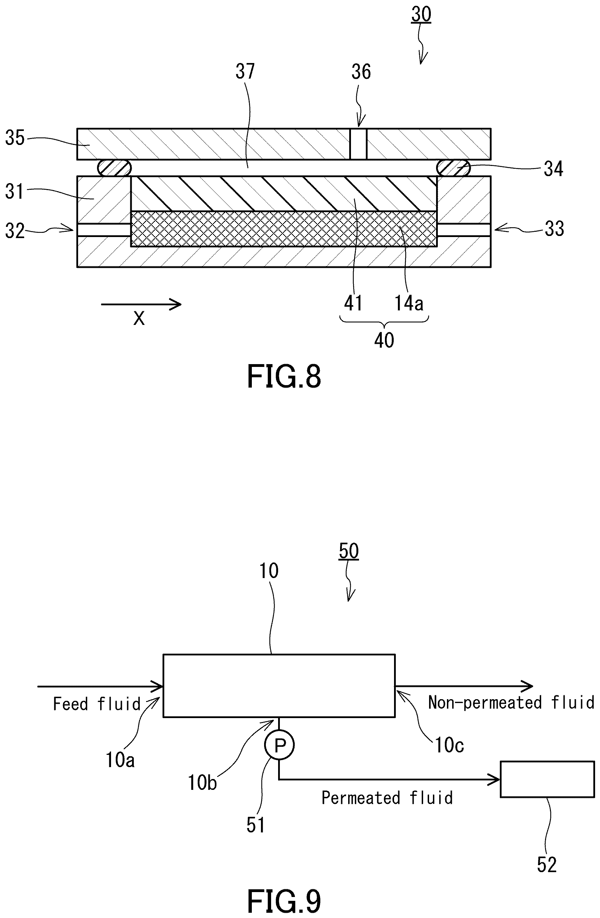

The fact that using the permeation spacer 14 can suppress an increase in the pressure loss of the permeated fluid in the separation membrane element 10 can be verified by, for example, a pressure loss $\Delta p$ calculated by the following method using a measuring device 30 shown in FIG. 8. First, a permeation spacer 14a that is rectangular and is 47 mm in width and 150 mm in length is prepared. The permeation spacer 14a may have the shape of a rounded rectangle. The permeation spacer 14a has the same geometry, except its length and width, as that of the permeation spacer 14 that is before being wound around the central tube 21. The groove a and the projection b of the permeation spacer 14a extend in a longitudinal direction of the permeation spacer 14a. That is, the longitudinal direction of the permeation spacer 14a coincides with the first direction X. Note that in FIG. 8, the groove a and the projection b of the permeation spacer 14a are omitted. Next, a polyethylene terephthalate (PET) film 41 is laminated on the permeation spacer 14a to produce a specimen 40. The film 41 and the permeation spacer 14a may be fixed with a tape or the like. The film 41 is PET100SG2 available from PANAC Co., Ltd., for example.

Next, the specimen 40 is placed in the measuring device 30. The measuring device 30 includes a holder 31, a lid member 35, and a sealing member 34, for example. Specifically, the specimen 40 is placed in the holder 31 of the measuring device 30 in such a manner that the permeation spacer 14a of the specimen 40 is positioned to be lower than the film 41. Openings 32 and 33 are formed in a wall surface of the holder 31. Each of the openings 32 and 33 communicates with the permeation spacer 14a of the specimen 40. The openings 32 and 33 are positioned in such a manner that when a nitrogen gas is introduced from the opening 32, which is one of the openings, to an inside of the holder 31, the nitrogen gas moves in a longitudinal direction X of the permeation spacer 14a and is discharged from the opening 33, which is the other opening. The openings 32 and 33 may or may not face each other when viewed in cross section.

The lid member 35 is fastened to the holder 31 at an upper part of the holder 31 using a fastener (not shown) such as a screw member. In the lid member 35, an opening 36 for delivering a nitrogen gas to a space 37 adjacent to the film 41 of the specimen 40 is formed. The holder 31 and the lid member 35 are preferably composed of stainless steel (SUS) from the viewpoint of pressure resistance.

The sealing member 34 is positioned between the holder 31 and the lid member 35 and prevents gas flow between an inside and an outside of the measuring device 30 at a portion except the openings 32, 33, and 36. The sealing member 34 is, for example, a sealing ring (an O-ring) that is composed of an elastic material and has a circular cross section. FIG. 8 illustrates a state in which the sealing member 34 that is a sealing ring is squeezed.

Next, a nitrogen gas is delivered to the space 37 adjacent to the film 41 of the specimen 40 through the opening 36 of the lid member 35 in such a manner that the pressure in the space 37 is 0.1 MPa while a nitrogen gas is delivered to the permeation spacer 14a through the opening 32 of the holder 31 at a flow rate of 2.0 L/min. The nitrogen gas to be delivered into the measuring device 30 has a temperature of 23°C, for example. The nitrogen gas delivered through the opening 32 moves in the permeation spacer 14a in the longitudinal direction X of the permeation spacer 14a and is discharged from the opening 33. A difference (a pressure difference d1) between the pressure of the nitrogen gas delivered to the opening 32 and the pressure of the nitrogen gas discharged from the opening 33 is measured. Next, a pressure difference d0 is measured by the same method as the method for measuring the pressure difference d1, except that the permeation spacer 14a is absent. Based on the pressure differences d0 and d1, a pressure loss caused by the permeation spacer 14a is calculated. The calculated value can be considered as the pressure loss $\Delta p$ caused by that the nitrogen gas moves in the permeation spacer 14a in the longitudinal direction X of the permeation spacer 14a.

In the present embodiment, the pressure loss $\Delta p$ measured by the above-mentioned method is, for example, less than 22.0 kPa, preferably 20.0 kPa or less, and may be 18.0 kPa or less. The lower limit of the pressure loss $\Delta p$ is not particularly limited. The pressure loss $\Delta p$ is, for example, 8.0 kPa or more, and may be 10.0 kPa or more or 12.0 kPa or more.

<Method for calculating permeation flow rate>

The fact that using the permeation spacer 14 makes it possible to secure a sufficient permeation flow rate in the separation membrane element 10 can be verified by, for example, a permeation flow rate f per volume of the separation membrane element 10 calculated by the following method using an evaluation system 50 shown in FIG. 9. First, the separation membrane element 10 is produced by the above-mentioned method in such a manner as to have an effective membrane area of 4680 cm$^2$. The produced separation membrane element 10 is operated in accordance with the decompression type using carbon dioxide as the feed fluid. In the operation in accordance with the decompression type, the feed fluid to be supplied to a feed side 10a in the separation membrane element 10 has a temperature of 23°C and a pressure of 0.1 MPa. In the decompression type, a space (a space in the permeated fluid flow passage) where the permeated fluid is obtained is decompressed to approximately 70 kPa or less using a vacuum pump 51. Next, the amount of a gas having permeated is measured using a soap film flow meter 52. The soap film flow meter 52 is, for example, a precision film flow meter (FILM FLOW METER VP-4U) available from HORIBA STEC Co., Ltd. The permeation flow rate f per volume of the separation membrane element 10 can be calculated by dividing the measured value by a volume of the separation membrane element 10.

In the present embodiment, the permeation flow rate f per volume of the separation membrane element 10 measured by the above-mentioned method is, for example, more than 2743 m$^3$/h•atmospheric pressure•m$^3$, and preferably 2800 m$^3$/h•atmospheric pressure•m$^3$ or more. The upper limit of the permeation flow rate f is not particularly limited. The permeation flow rate f is, for example, 3000 m$^3$/h•atmospheric pressure•m$^3$ or less and may be 4000 m$^3$/h•atmospheric pressure•m$^3$ or less.

[Use of spiral membrane element]

As the use of the separation membrane element 10 of the present embodiment, there can be mentioned the use for separating an acid gas from a gas mixture containing the acid gas. Examples of the acid gas in the gas mixture include carbon dioxide, hydrogen sulfide, carbonyl sulfide, sulfur oxide (SOx), hydrogen cyanide, and nitrogen oxide (NOx), and preferred is carbon dioxide. The gas mixture contains an additional gas other than the acid gas. Examples of the additional gas include a nonpolar gas such as hydrogen or nitrogen, and an inert gas such as helium, and preferred is nitrogen. Particularly, the separation membrane element 10 of the present embodiment is suitably used for separating carbon dioxide from a gas mixture containing carbon dioxide and nitrogen. However, the use of the separation membrane element 10 is not limited to the use for separating an acid gas from the above-mentioned gas mixture.

[Membrane separation method using spiral membrane element]

Next, a membrane separation method using the separation membrane element 10 of the present embodiment will be described. The membrane separation method using the separation membrane element 10 includes generating a pressure difference by decompressing from the permeation side in the separation membrane element 10. Since the membrane separation method is in accordance with the operating type (the decompression type) in which a pressure difference is generated by decompressing from a permeation side in a spiral membrane element, the pressure difference during operation tends to be smaller than that in the operating type (the pressurization type) in which pressurization is carried out by controlling a feed pressure from a non-permeation side in a spiral membrane element. When the pressure difference during operation is small, the spiral membrane element is likely to be affected by an increase in the pressure loss of the permeated fluid. However, using the separation membrane element 10 of the present embodiment as the spiral membrane element makes it possible to suppress an increase in the pressure loss of the permeated fluid during operation.

EXAMPLES

Hereinafter, the present invention will be described in more detail by way of Examples and Comparative Examples, but the present invention is not limited to these examples.

(Examples 1 and 2 and Comparative Examples 1 to 3)

[Production of separation membrane]

First, a coating liquid containing a silicone resin and a polyurethane resin at a weight ratio of 9:1 was prepared. The coating liquid contained water as a solvent. Next, the coating liquid was applied onto a porous support member by a gravure coating method to obtain a coating film. As the porous support member, a UF membrane (ultrafiltration membrane) RS-50 (a laminate of a PVDF porous layer and a PET nonwoven fabric) available from Nitto Denko Corporation was used. The obtained coating film was dried to form an intermediate layer. Thus, a separation membrane was obtained.

As the permeation spacer of each of Examples 1 and 2 and Comparative Examples 1 to 3, a single tricot knit was used. As for each of Examples and Comparative Examples, the width $W_1$ of the groove, the width $W_2$ of the projection, the height H of the projection, and the thickness T of the permeation spacer were measured by the above-mentioned method. The pressure loss $\Delta p$ of the permeation spacer was calculated by the above-mentioned method. The permeation flow rate f per volume of the separation membrane element was measured by the above-mentioned method. Table 1 shows the results.

[Table 1]

| | $W_1$<br>Width of groove<br>($\mu$m) | $W_2$<br>Width of projection<br>($\mu$m) | H<br>Height of projection<br>($\mu$m) | $1000 \times \{(W_1/W_2)/H\}$ | T<br>Thickness of permeation spacer<br>($\mu$m) | $\Delta p$<br>Pressure loss<br>(kPa) | f<br>Permeation flow rate per volume of separation membrane element<br>($m^3$/h·atmospheric pressure·$m^3$) |
|---|---|---|---|---|---|---|---|
| Example 1 | 800 | 620 | 138 | 9.35 | 340 | 13.4 | 2809 |
| Example 2 | 1100 | 613 | 160 | 11.22 | 295 | 16.1 | 2803 |
| Comparative Example 1 | 375 | 480 | 129 | 6.06 | 232 | 25.8 | 2742 |
| Comparative Example 2 | 120 | 480 | 130 | 1.92 | 239 | 43.5 | 2287 |
| Comparative Example 3 | 1000 | 500 | 110 | 18.2 | 225 | 22.3 | 2619 |

The results in Table 1 show that the pressure loss $\Delta p$ was a smaller value and the permeation flow rate f per volume of the separation membrane element was a larger value in each of Examples than in Comparative Examples. From this, it is inferred that when a spiral membrane element was produced using a permeation spacer satisfying $9.1 \leq 1000 \times \{(W1/W2)/H\} < 18.2$, the balance among the width W1 of the groove a, the width W2 of the projection b, and the height H of the projection b was excellent in the spiral membrane element, and thus it was possible to suppress an increase in the pressure loss of the permeated fluid and secure a sufficient permeation flow rate in the case of membrane separation in accordance with the decompression type.

INDUSTRIAL APPLICABILITY

The spiral membrane element of the present embodiment is suitable for separating an acid gas from a gas mixture containing the acid gas. In particular, the spiral membrane element of the present embodiment is suitable for separating carbon dioxide from an off-gas of a chemical plant or a thermal power plant.

**Claims**

1. A spiral membrane element comprising:

   a central tube; and
   a membrane leaf that has a separation membrane and a permeation spacer and is wound around the central tube;
   wherein
   the permeation spacer has a plurality of grooves and a plurality of projections on one surface thereof,
   the grooves and the projections each extend in a first direction and are arranged in a second direction perpendicular to the first direction on the one surface, and
   when the groove has a width defined as W1 and the projection has a width defined as W2 in the second direction and the projection has a height defined as H,

   $$9.1 \leq 1000 \times \{(W1/W2)/H\} < 18.2$$

   is satisfied,
   where W1, W2, and H are in unit of $\mu$m.

2. The spiral membrane element according to claim 1, wherein

   when a distance between a top portion that the projection on the one surface has and another surface of the permeation spacer is defined as T,
   the permeation spacer satisfies $T \leq 450$,
   where T is in unit of $\mu$m.

3. The spiral membrane element according to claim 1, wherein

   when a distance between a top portion that the projection on the one surface has and another surface of the permeation spacer is defined as T,
   the permeation spacer satisfies $0.35 \leq HIT \leq 0.65$,
   where T is in unit of $\mu$m.

4. The spiral membrane element according to claim 1, wherein
   the permeation spacer satisfies $H \leq 200$.

5. The spiral membrane element according to claim 1, wherein
   the permeation spacer satisfies $1.2 \leq W1/W2 < 2.0$.

6. The spiral membrane element according to claim 1, wherein
   the permeation spacer satisfies $600 \leq W1$.

7. The spiral membrane element according to claim 1, wherein

the permeation spacer satisfies $500 \leq$ W2.

8. The spiral membrane element according to claim 1, wherein
the permeation spacer satisfies $100000 \leq$ W1 $\times$ H.

9. The spiral membrane element according to claim 1, wherein
the spiral membrane element is used for separating an acid gas from a gas mixture containing the acid gas.

10. A permeation spacer used in combination with a separation membrane wound around a central tube of a spiral membrane element, comprising

a plurality of grooves and a plurality of projections on one surface thereof, wherein
the grooves and the projections each extend in a first direction and are arranged in a second direction perpendicular to the first direction on the one surface, and
when the groove has a width defined as W1 and the projection has a width defined as W2 in the second direction and the projection has a height defined as H,

$$9.1 \leq 1000 \times \{(W1/W2)/H\} < 18.2$$

is satisfied,
where W1, W2, and H are in unit of $\mu$m.

11. A membrane separation method using the spiral membrane element according to any one of claims 1 to 9, comprising
generating a pressure difference by decompressing from a permeation side in the spiral membrane element.

FIG.1

FIG.2

14

a (a1)      a (a2)      a (a3)      a (a4)

A1

X
Y ⊗ Z

b (b1)      b (b2)      b (b3)

## FIG.3A

14

a (a1)      a (a2)      a (a3)      a (a4)    A1
      b (b1)      b (b2)      b (b3)

H

T

X
Y ⊗
Z

W1  W2

A2

## FIG.3B

**FIG.3C**

Pressure

Separation membrane

Permeation spacer

**FIG.4**

**FIG.5**

FIG.6

FIG.7

FIG.8

FIG.9

# INTERNATIONAL SEARCH REPORT

| International application No. |
|---|
| **PCT/JP2023/005335** |

### A. CLASSIFICATION OF SUBJECT MATTER

**B01D 63/00**(2006.01)i; **B01D 63/10**(2006.01)i; **B01D 53/22**(2006.01)i
FI: B01D63/10; B01D63/00 510; B01D53/22

According to International Patent Classification (IPC) or to both national classification and IPC

### B. FIELDS SEARCHED

Minimum documentation searched (classification system followed by classification symbols)

B01D29/07, 21; B01D61/00-71/82; B01D53/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2015/064752 A1 (TORAY INDUSTRIES, INC.) 07 May 2015 (2015-05-07) paragraphs [0001], [0057]-[0095], [0132]-[0134], examples, table 1 | 1-10 |
| Y | paragraphs [0001], [0057]-[0095], [0132]-[0134], examples, table 1 | 11 |
| X | JP 2015-071159 A (TORAY INDUSTRIES, INC.) 16 April 2015 (2015-04-16) paragraphs [0079]-[0105], [0184]-[0186], examples, tables 3, 5 | 1-10 |
| Y | paragraphs [0079]-[0105], [0184]-[0186], examples, tables 3, 5 | 11 |
| Y | JP 5-208120 A (TORAY INDUSTRIES, INC.) 20 August 1993 (1993-08-20) claims, paragraphs [0001], [0008] | 11 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/005335**

| Patent document cited in search report | | | Publication date (day/month/year) | Patent family member(s) | Publication date (day/month/year) |
|---|---|---|---|---|---|
| WO | 2015/064752 | A1 | 07 May 2015 | US 2016/0303514 A1 paragraphs [0002], [0102]-[0151], [0213]-[0216], examples, table 1<br>EP 3064267 A1<br>CN 105658312 A | |
| JP | 2015-071159 | A | 16 April 2015 | (Family: none) | |
| JP | 5-208120 | A | 20 August 1993 | (Family: none) | |

Form PCT/ISA/210 (patent family annex) (January 2015)

**EP 4 494 750 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015024372 A